# EUROPÄISCHE PATENTSCHRIFT

(11) **EP 3 764 065 B1**
(45) Veröffentlichungstag und Bekanntmachung des Hinweises auf die Patenterteilung: **13.07.2022**
(21) Anmeldenummer: 20165894.5
(22) Anmeldetag: 26.03.2020
(51) Int. Cl.: G01D 5/244, G01B 11/00, G01B 21/04, G01D 5/347

(54) **POSITIONSMESSEINRICHTUNG**
POSITION MEASURING DEVICE
DISPOSITIF DE MESURE DE POSITION

(30) Priorität: 08.07.2019 DE 102019210023
(43) Veröffentlichungstag der Anmeldung: 13.01.2021
(73) Patentinhaber: Dr. Johannes Heidenhain GmbH, 83301 Traunreut (DE)
(72) Erfinder: BECKER, Thomas, 83301 Traunreut (DE); MITTERLEITNER, Josef, 83339 Chieming (DE); PUCHER, Wolfgang, 83278 Traunstein (DE)

(56) Entgegenhaltungen:
- EP-A1- 2 003 681
- WO-A1-2017/178224
- DE-A1-102005 023 984
- DE-A1-102008 010 284
- US-A1- 2019 078 911

## Beschreibung

### GEBIET DER TECHNIK

Die vorliegende Erfindung betrifft eine Positionsmesseinrichtung nach den Merkmalen des Oberbegriffs des Anspruchs 1.

### STAND DER TECHNIK

Die WO 2017/080612 A1 offenbart eine Positionsmesseinrichtung zur Messung der Relativlage zweier zueinander beweglicher Objekte in einer Vorschubrichtung und in weiteren Freiheitsgraden. Diese Positionsmesseinrichtung umfasst einen in Vorschubrichtung längserstreckten prismatischen Trägerkörper mit mehreren Oberflächen, die jeweils eine Messteilung tragen sowie mit einer relativ dazu beweglichen Abtastbaugruppe mit mehreren Abtasteinheiten zur Abtastung der Messteilungen.

Wie in der WO 2017/080612 A1 angegeben ist, finden derartige Positionsmesseinrichtungen Anwendung zum Messen von Fehlern in Koordinatenmessmaschinen. Die damit erfassten Messwerte können zur Korrektur von Fehlern der Koordinatenmessmaschine und Kalibrierung der Koordinatenmessmaschine genutzt werden.

### ZUSAMMENFASSUNG DER ERFINDUNG

Der vorliegenden Erfindung liegt die Aufgabe zugrunde, eine Positionsmesseinrichtung anzugeben, mit der eine präzise Positionsmessung in Längsrichtung eines Messteilungen tragenden Trägerkörpers sowie in weiteren Freiheitsgraden ermöglicht wird.

Diese Aufgabe wird erfindungsgemäß durch die Positionsmesseinrichtung mit den Merkmalen des Anspruchs 1 gelöst.

Die Positionsmesseinrichtung ist ausgebildet zur Messung der Relativlage zweier zueinander beweglicher Objekte in einer Vorschubrichtung und in weiteren Freiheitsgraden. Sie umfasst einen in der Vorschubrichtung längserstreckten Trägerkörper mit Messteilungen und einer relativ dazu beweglichen Abtastbaugruppe mit mehreren Abtasteinheiten zur Abtastung der Messteilungen.

Der Trägerkörper weist mehrere in Vorschubrichtung verlaufende Oberflächen auf. Diese Oberflächen liegen in verschiedenen Ebenen. Bevorzugt sind die die Messteilungen tragenden Oberflächen des Trägerkörpers derart angeordnet, dass die Lage der Abtastbaugruppe relativ zum Trägerkörper in allen sechs Freiheitsgraden bestimmbar ist. Hierzu sind die die Oberflächen bildenden Ebenen des Trägerkörpers vorzugsweise derart räumlich angeordnet, dass sich zwischen ihnen mehrere in Vorschubrichtung verlaufende Schnittgeraden ergeben.

Zumindest drei dieser Oberflächen tragen jeweils eine erste Messteilung und eine zweite Messteilung, wobei die erste Messteilung und die zweite Messteilung jeweils eine Folge von Teilungsstrichen aufweisen und die Teilungsstriche der ersten Messteilung gegenüber den Teilungsstrichen der zweiten Messteilung geneigt sind. Geneigt bedeutet, dass die Teilungsstriche der ersten Messteilung anders ausgerichtet bzw. orientiert sind wie die Teilungsstriche der zweiten Messteilung. Die erste Messteilung und die zweite Messteilung einer der Oberflächen sind somit dazu geeignet in-plane Freiheitsgrade zu ermitteln, wobei die Bezugsebene die jeweilige Oberfläche des Trägerkörpers ist.

Jeder der ersten Messteilungen und jeder der zweiten Messteilungen ist zumindest eine der Abtasteinheiten zur Abtastung der jeweiligen Messteilung an einem Abtastort zugeordnet, wobei diese zwei Abtasteinheiten jeweils derart angeordnet sind und die Teilungsstriche der zwei Messteilungen jeweils derart zueinander geneigt sind, dass jeweils zwei zu einer der Oberflächen des Trägerkörpers senkrechte Ebenen, die jeweils in Richtung der jeweiligen Teilungsstriche einer der Messteilungen durch die Abtastorte der jeweils einer der Oberflächen zugeordneten zwei Abtasteinheiten verlaufen, eine gemeinsame Schnittachse aufweisen und dass die sich so ergebenden drei Schnittachsen durch einen gemeinsamen Punkt verlaufen.

Dieser gemeinsame Punkt ist für alle Abtasteinheiten der thermisch neutrale Punkt.

Die Teilungsstriche können entlang ihres Verlaufs gleiche Breiten aufweisen sowie auch ununterbrochen ausgebildet sein. Die Teilungsstriche können aber auch entlang ihres Verlaufs unterbrochen sein oder auch breitenmoduliert sein, beispielsweise in bekannter Weise zur Oberwellenfilterung.

Eine zur jeweiligen Oberfläche senkrechte Ebene verläuft somit einerseits durch den Abtastort der der jeweiligen Messteilung zugeordneten Abtasteinheit und ist andererseits in Richtung der Teilungsstriche dieser Messteilung ausgerichtet. Der Verlauf der Ebene in Richtung der Teilungsstriche ist gleichzusetzen mit der Richtung senkrecht zum Verlauf des Empfindlichkeitsvektors der entsprechenden Messteilung. Der Empfindlichkeitsvektor einer Messteilung gibt dabei die Bewegungsrichtung an, in der sich ein davon abgeleitetes Messsignal pro zurückgelegter Längeneinheit am schnellsten verändert. Dementsprechend verläuft die Ebene in der Richtung, in der sich ein davon abgeleitetes Messsignal pro zurückgelegter Längeneinheit am geringsten verändert, die positionsabhängige Modulation also am geringsten ist.

Mit der Erfindung wird die Messgenauigkeit der Positionsmesseinrichtung erhöht und temperaturbedingte Einflüsse, welche die Positionsmessung verfälschen können, werden vermieden bzw. zumindest vermindert.

Vorteilhafte Ausführungen der Erfindung ergeben sich aus den Maßnahmen, die in den abhängigen Ansprüchen aufgeführt sind.

Die die Messteilungen tragenden Oberflächen des Trägerkörpers, die Messteilungen sowie die Abtasteinheiten sind bevorzugt derart angeordnet und ausgebildet, dass die Lage der Abtastbaugruppe relativ zum Trägerkörper in allen sechs Freiheitsgraden bestimmbar ist.

Der Trägerkörper ist insbesondere ein prismatischer Körper, wobei die den prismatischen Körper definierende Grundfläche ein Vieleck ist und die zumindest drei Oberflächen die Mantelflächen des prismatischen Körpers sind.

Alternativ kann der Trägerkörper ein U-Profil sein, wobei die die Messteilungen tragenden Oberflächen Innenflächen und / oder Außenflächen des U-Profils sein können.

Für bestimmte Anwendungsfälle kann es von Vorteil sein, wenn die Messteilungen und die Abtasteinheiten derart ausgebildet und angeordnet sind, dass der gemeinsame thermisch neutrale Punkt in der Querschnittsmitte des Trägerkörpers liegt.

In vorteilhafter Weise sind die erste Messteilung und die zweite Messteilung einer Oberfläche jeweils benachbart zueinander entlang einer Richtung senkrecht zur Vorschubrichtung angeordnet.

Alternativ können die erste Messteilung und die zweite Messteilung auch einander überlappend angeordnet sein, wobei derartige sich kreuzende Messteilungen auch Kreuzgitter genannt werden.

Vorteilhaft ist, wenn die Teilungsstriche der ersten Messteilung relativ zur Vorschubrichtung abweichend von 0° geneigt sind und die Teilungsstriche der zweiten Messteilung relativ zur Vorschubrichtung ebenfalls abweichend von 0° geneigt sind. Dabei können die Teilungsstriche der ersten Messteilung und die Teilungsstriche der zweiten Messteilung betragsmäßig um den gleichen Winkel relativ zur Vorschubrichtung geneigt sein.

Eine besonders hochauflösende Positionsmesseinrichtung erhält man, wenn die Messteilungen optisch abtastbar ausgebildet sind.

Die Messteilungen können Inkrementalteilungen sein, wobei zur Herstellung eines absoluten Bezugs in die Inkrementalteilung jeweils eine Referenzmarkenstruktur integriert sein kann. Alternativ können die Messteilungen auch absolute Teilungen sein, insbesondere ausgebildet als Pseudo Random Code.

Hinsichtlich der Optimierung des Wärmeeintrags kann es vorteilhaft sein, wenn jeder der in Vorschubrichtung verlaufenden Oberflächen des Trägerkörpers die gleiche Anzahl von Abtasteinheiten zugeordnet ist.

Weitere Einzelheiten und Vorteile der vorliegenden Erfindung werden anhand der nachfolgenden Beschreibung von möglichen Ausgestaltungen der Erfindung in Verbindung mit den Figuren erläutert.

### KURZE BESCHREIBUNG DER ZEICHNUNGEN

Es zeigt
- Figur 1: eine perspektivische Ansicht einer erfindungsgemäß ausgestalteten Positionsmesseinrichtung mit einem Trägerkörper und einer Abtastbaugruppe;
- Figur 2: einen Querschnitt durch die Positionsmesseinrichtung gemäß Figur 1 im Bereich der Abtastbaugruppe;
- Figur 3: die Zuordnung von zwei Abtasteinheiten der Abtastbaugruppe zu Messteilungen einer Oberfläche des Trägerkörpers;
- Figur 4: die Zuordnung aller Abtasteinheiten der Abtastbaugruppe zu den Messteilungen der Oberflächen des Trägerkörpers;
- Figur 5: eine alternative Ausgestaltung von Messteilungen mit ihr zugeordneten Abtasteinheiten;
- Figur 6: eine Ausgestaltung der Messteilungen in Form von absoluten Teilungen mit ihr zugeordneten Abtasteinheiten;
- Figur 7: ein zweites Ausführungsbeispiel einer erfindungsgemäßen Positionsmesseinrichtung;
- Figur 8: den Trägerkörper gemäß Figur 7 mit einer möglichen Ausgestaltung der ihm zugeordneten Abtastbaugruppe im Querschnitt, und
- Figur 9: ein drittes Ausführungsbeispiel einer erfindungsgemäßen Positionsmesseinrichtung.

### BESCHREIBUNG DER AUSFÜHRUNGSFORMEN

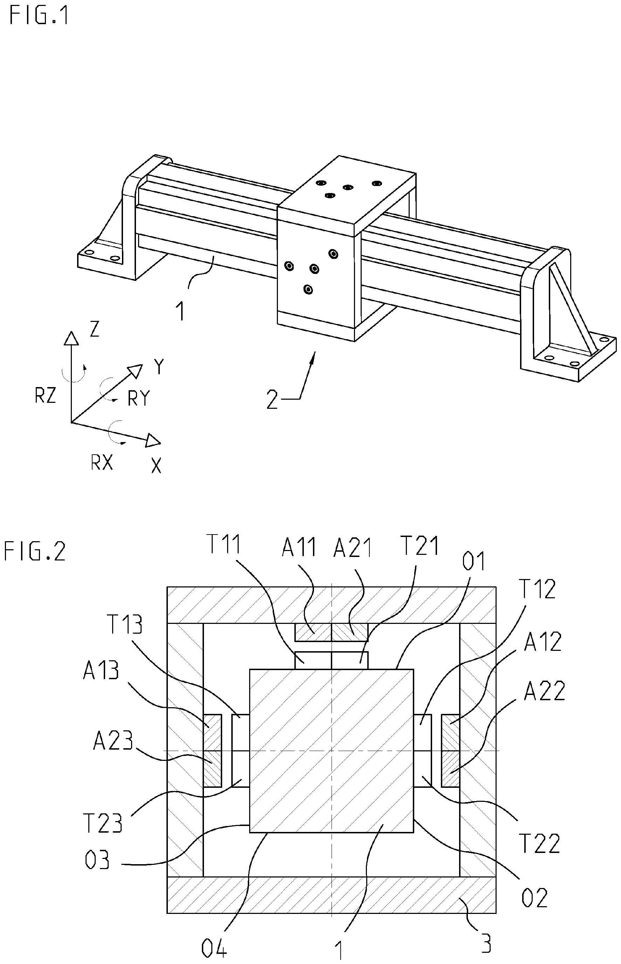

Die Figuren 1 bis 4 zeigen ein erstes Ausführungsbeispiel einer erfindungsgemäß ausgestalteten Positionsmesseinrichtung. Diese Positionsmesseinrichtung dient zur Messung der Relativlage zweier zueinander beweglicher Objekte in einer Vorschubrichtung X und in weiteren Freiheitsgraden Y, Z, RX, RY, RZ. Dabei sind die drei Freiheitsgrade X, Y, Z lineare Freiheitsgrade und die Freiheitsgrade RX, RY, RZ rotatorische Freiheitsgrade um die jeweilige lineare Achse X, Y, Z. Die Vorschubrichtung X ist dabei die Hauptmessrichtung und die weiteren Freiheitsgrade Y, Z, RX, RY, RZ sind mit der Positionsmesseinrichtung messbare Abweichungen an der jeweiligen Position X.

Die Positionsmesseinrichtung umfasst einen in der Vorschubrichtung X längserstreckten Trägerkörper 1, der an einem der zu messenden Objekte befestigbar ist. Hierzu sind zwischen dem Trägerkörper 1 und dem zu messenden Objekt Befestigungselemente angeordnet, die in Figur 1 nur schematisch dargestellt sind. Besonders vorteilhaft ist es, wenn die Befestigungselemente dazu ausgebildet sind, den Trägerkörper 1 an einer einzigen Position in Vorschubrichtung X am zu messenden Objekt starr zu fixieren und an einer oder an weiteren Positionen in Vorschubrichtung X längsverschiebbar gegenüber dem zu messenden Objekt zu lagern. Temperaturbedingte Längenänderungen zwischen dem zu messenden Objekt und dem Trägerkörper 1 werden dadurch ausgeglichen ohne dass auf den Trägerkörper 1 unzulässige Zwangskräfte ausgeübt werden. Diese längsverschiebbare Lagerung kann in bekannter Weise beispielsweise mittels Festkörpergelenken realisiert werden.

Erfindungsgemäß weist der Trägerkörper 1 zumindest drei in Vorschubrichtung X verlaufende Oberflächen O1, O2, O3 auf. Vorzugsweise ist der Trägerkörper 1 als prismatischer Körper ausgebildet, dessen Grundfläche einen geschlossenen Polygonzug bildet und dessen Mantelflächen die zumindest drei ebenen Oberflächen O1, O2, O3 ausbilden. Der geschlossene Polygonzug ist im einfachsten Fall ein Dreieck.

Im dargestellten Ausführungsbeispiel bildet der Polygonzug ein gleichseitiges Viereck, so dass der Trägerkörper 1 quaderförmig mit vier ebenen Oberflächen O1, O2, O3, O4 mit dem in Figur 2 gezeigten Querschnitt ist.

Gemäß der Erfindung tragen zumindest drei der Oberflächen O1, O2, O3, O4 des Trägerkörpers 1 jeweils eine erste Messteilung T11, T12, T13 und eine zweite Messteilung T21, T22, T23. Die erste Messteilung T11, T12, T13 und die zweite Messteilung T21, T22, T23 weisen jeweils eine Folge von Teilungsstrichen auf, wobei die Teilungsstriche der ersten Messteilung T11, T12, T13 und die Teilungsstriche der zweiten Messteilung T21, T22, T23 jeweils zueinander geneigt sind, d. h., einen Winkel abweichend von 0° zueinander einschließen.

Die Messteilungen T11 bis T13 und T21 bis T23 können optisch, magnetisch, induktiv oder kapazitiv abtastbar ausgebildet sein. Die Teilungsstriche der Messteilungen T11 bis T13 und T21 bis T23 können direkt in die Oberflächen O1 bis O3 eingebracht oder auf den Oberflächen O1 bis O3 aufgebracht sein, z.B. mittels Aufmagnetisieren bei einer magnetisch abtastbaren Messteilung oder durch Laserablation bei einer optisch abtastbaren Messteilung T11 bis T13 und T21 bis T23. Die beiden einer Oberfläche O1-O3 zugeordneten Messteilungen können alternativ auf einem extra Träger aufgebracht sein, der dann auf dieser Oberfläche O1, O2, O3 des Trägerkörpers 1 befestigt wird, beispielweise durch Kleben oder durch Ansprengen. Im letzteren Fall ist von Vorteil, wenn der Trägerkörper 1 und die Träger der Messteilungen aus Materialen mit identischem thermischen Längenausdehnungskoeffizienten bestehen.

Ist eine besonders hochgenaue Positionsmessung gewünscht, werden die Messteilungen T11 bis T13 und T21 bis T23 optisch abtastbar ausgestaltet. Dabei besteht die Folge von Teilungsstrichen vorzugsweise aus einer Abfolge von reflektierenden und nichtreflektierenden Bereichen.

Die Positionsmesseinrichtung umfasst weiterhin eine relativ zum Trägerkörper 1 bewegliche Abtastbaugruppe 2 zur Abtastung der Messteilungen T11 bis T13 und T21 bis T23. Die Abtastbaugruppe 2 umfasst mehrere Abtasteinheiten A11 bis A13 und A21 bis A23 und einen gemeinsamen Halter 3, an dem die Abtasteinheiten A11 bis A13 und A21 bis A23 befestigt sind.

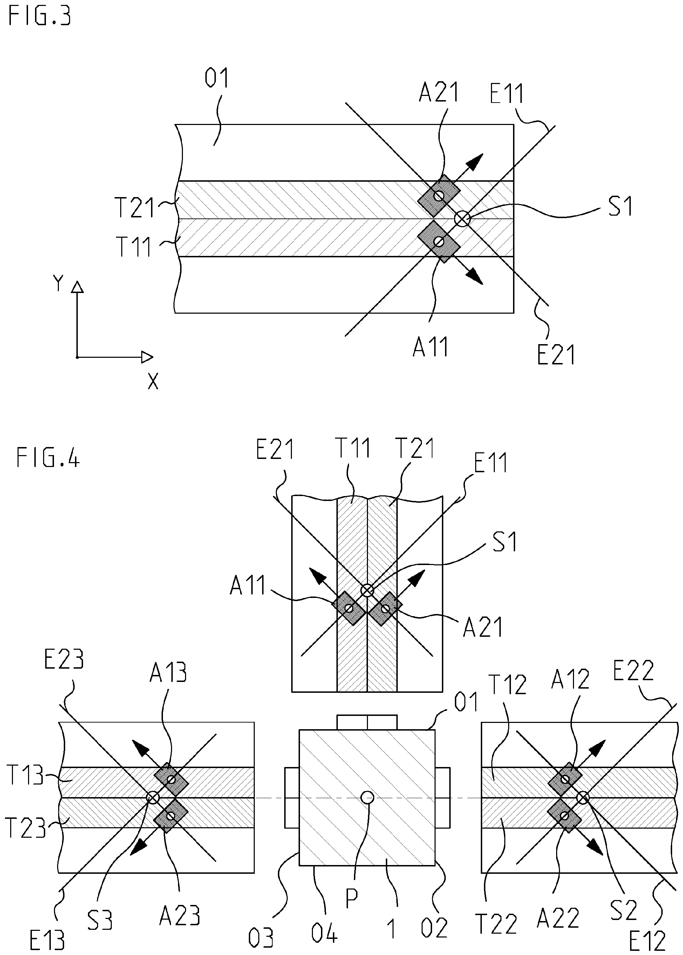

Besonders vorteilhaft ist, wenn die Teilungsstriche der jeweils ersten Messteilung T11, T12, T13 schräg zur Vorschubrichtung X angeordnet sind, d. h., relativ zur Vorschubrichtung X abweichend von 0° geneigt sind sowie die Teilungsstriche jeweils der zweiten Messteilung T21, T22, T23 ebenfalls schräg zur Vorschubrichtung X angeordnet sind, d. h., relativ zur Vorschubrichtung X ebenfalls abweichend von 0° geneigt sind. Dies hat den Vorteil, dass bei einer Bewegung in Vorschubrichtung X jede Abtasteinheit A11 bis A13 und A21 bis A23 in einer Richtungskomponente des jeweiligen Empfindlichkeitsvektors bewegt wird und somit ein moduliertes positionsabhängiges Abtastsignal generiert. Dies ermöglicht eine Echtzeitkompensation aller Abtastsignale. In den Figuren 3 und 4 ist der Empfindlichkeitsvektor der Abtasteinheiten A11 bis A13 und A21 bis A23 mit einem kleinen Pfeil an der jeweiligen Abtasteinheit A11 bis A13 und A21 bis A23 dargestellt.

In vorteilhafter Weise sind die Abtasteinheiten A11 bis A13 und A21 bis A23 derart ausgestaltet, dass diese bei der Abtastung der ihr zugeordneten Messteilung T11 bis T13 und T21 bis T23 mehrere jeweils sinusförmige und gegeneinander phasenverschobene periodische Abtastsignale generieren, insbesondere um 90° gegeneinander phasenverschobene Abtastsignale.

Eine mögliche erfindungsgemäße Anordnung und Ausgestaltung der Messteilungen T11 bis T13 und T21 bis T23 sowie der ihr zugeordneten Abtasteinheiten A11 bis A13 und A21 bis A23 wird anhand der Figuren 3 und 4 noch näher erläutert.

Bei dieser Ausgestaltung trägt die Oberfläche O1 die erste Messteilung T11 und die zweite Messteilung T21. Die Teilungsstriche der ersten Messteilung T11 sind relativ zur Vorschubrichtung X geneigt, beispielsweise um +45°. Die Teilungsstriche der zweiten Messteilung T21 sind relativ zu den Teilungsstrichen der ersten Messteilung T11 und in vorteilhafter Weise auch relativ zur Vorschubrichtung X geneigt, beispielsweise um -45°. Sind die Teilungsstriche der ersten Messteilung T11 sowie die Teilungsstriche der zweiten Messteilung T21 betragsmäßig um den gleichen Winkel gegenüber der Vorschubrichtung X geneigt, ergibt sich der besondere Vorteil, dass sich für die bei der Abtastung ergebenden Abtastsignale gleiche Positionsänderungen ergeben.

Die Oberfläche O2 trägt die erste Messteilung T12 und die zweite Messteilung T22. Die Teilungsstriche der ersten Messteilung T12 sind relativ zur Vorschubrichtung X geneigt, beispielsweise um +45°. Die Teilungsstriche der zweiten Messteilung T22 sind relativ zu den Teilungsstrichen der ersten Messteilung T12 und in vorteilhafter Weise auch relativ zur Vorschubrichtung X geneigt, beispielsweise um -45°.

Die Oberfläche O3 trägt die erste Messteilung T13 und die zweite Messteilung T23. Die Teilungsstriche der ersten Messteilung T13 sind relativ zur Vorschubrichtung X geneigt, beispielsweise um +45°. Die Teilungsstriche der zweiten Messteilung T23 sind relativ zu den Teilungsstrichen der ersten Messteilung T13 und in vorteilhafter Weise auch relativ zur Vorschubrichtung X geneigt, beispielsweise um -45°.

Jeder der ersten Messteilungen T11, T12, T13 und jeder der zweiten Messteilungen T21, T22, T23 ist zumindest eine Abtasteinheit A11, A12, A13 sowie A21, A22, A23 zur Abtastung an einem Abtastort zugeordnet. Der Abtastort ist der Bezugspunkt der Positionsmessung der jeweiligen Abtasteinheit A11 bis A13 und A21 bis A23. In den Figuren 3 und 4 ist der Abtastort innerhalb jeder der geschwärzt dargestellten Abtasteinheiten A11 bis A13 und A21 bis A23 mit einem hellen Punkt symbolisch dargestellt.

Die Zuordnung der jeweils zwei Abtasteinheiten A11, A21 sowie A12, A22 sowie A13, A23 zu den jeweils zwei Messteilungen T11, T21 sowie T12, T22 sowie T13, T23 einer der Oberflächen O1, O2, O3 wird nachfolgend anhand der Figur 3 am Beispiel der beiden Abtasteinheiten A11 und A21 näher erläutert.

Legt man eine erste Ebene E11 in Richtung der Teilungsstriche der ersten Messteilung T11 durch den Abtastort der Abtasteinheit A11 senkrecht zur Oberfläche O1 sowie eine zweite Ebene E21 in Richtung der Teilungsstriche der zweiten Messteilung T21 durch den Abtastort der Abtasteinheit A21 senkrecht zur Oberfläche O1, so ergibt sich zwischen diesen beiden Ebenen E11, E21 eine gemeinsame Schnittachse S1. Diese Schnittachse S1 bildet für die der Oberfläche O1 zugeordneten Abtasteinheiten A11, A21 eine thermisch neutrale Achse. Bei einer homogenen Ausdehnung des Halters 3 und somit der Abtastbaugruppe 2 von dieser thermisch neutralen Achse S1 ausgehend bewegen sich die Abtasteinheiten A11, A21 nur in Richtung der Teilungsstriche, also senkrecht zum Empfindlichkeitsvektor der jeweiligen Abtasteinheit A11, A21 und senkrecht zur Oberfläche O1. Temperaturbedingte Ausdehnungen des Trägerkörpers 1 und des Halters 3 führen somit zu keinem Messfehler.

Die Zuordnung aller Abtasteinheiten A11 bis A13 und A21 bis A23 zu den Messteilungen T11 bis T13 und T21 bis T23 ist in Figur 4 dargestellt. Entsprechend der anhand der Figur 3 erläuterten Zuordnung der Abtasteinheiten A11 und A21 zu den Messteilungen T11, T21 sind die Abtasteinheiten A12, A22 den Messteilungen T12, T22 der Oberfläche O2 zugeordnet, so dass aus zwei Ebenen E12, E22 sich die Schnittachse S2 ergibt. Entsprechend sind auch die Abtasteinheiten A13, A23 den Messteilungen T13, T23 der Oberfläche O3 zugeordnet, so dass aus zwei Ebenen E13, E23 sich die Schnittachse S3 ergibt.

Bei diesem ersten Ausführungsbeispiel sind erfindungsgemäß die zumindest sechs Abtasteinheiten A11 bis A13 und A21 bis A23 derart angeordnet und die Teilungsstriche der sechs Messteilungen T11 bis T13 und T21 bis T23 derart ausgerichtet, dass die sich ergebenden drei Schnittachsen S1, S2, S3 durch einen gemeinsamen Punkt P verlaufen. Für die gesamte Positionsmessanordnung ist dieser Punkt P ein thermisch neutraler Punkt (thermal center). Bei einer homogenen Ausdehnung des Halters 3 und somit der Abtastbaugruppe 2 von diesem thermisch neutralen Punkt P ausgehend bewegen sich die Abtasteinheiten A11 bis A13 und A21 bis A23 nur in Richtung der jeweiligen Teilungsstriche, also senkrecht zum Empfindlichkeitsvektor der jeweiligen Messteilung T11 bis T13 und T21 bis T23 sowie senkrecht zu den jeweiligen Oberflächen O1, O2, O3. Eine temperaturbedingte Ausdehnung verursacht also ausschließlich eine Verlagerung in einer Ebene, die den Teilstrich enthält und die senkrecht zur jeweiligen Oberfläche O1, O2, O3 verläuft. Temperaturbedingte Ausdehnungen des Trägerkörpers 1 und des Halters 3 führen somit zu keinem Messfehler. Die Positionsmesseinrichtung ist invariant gegenüber homogenen Temperaturänderungen, wodurch Messfehler durch Änderung der Umgebungstemperatur minimiert werden.

Die Teilungsstriche der beiden auf jeweils einer der Oberflächen O1, O2, O3 angeordneten Messteilungen T11 bis T13 und T21 bis T23 sind erfindungsgemäß gegeneinander geneigt, schließen also einen Winkel abweichend von 0° ein. Im oben erläuterten Ausführungsbeispiel schließen sie beispielsweise jeweils einen gegenseitigen Winkel von 90° ein.

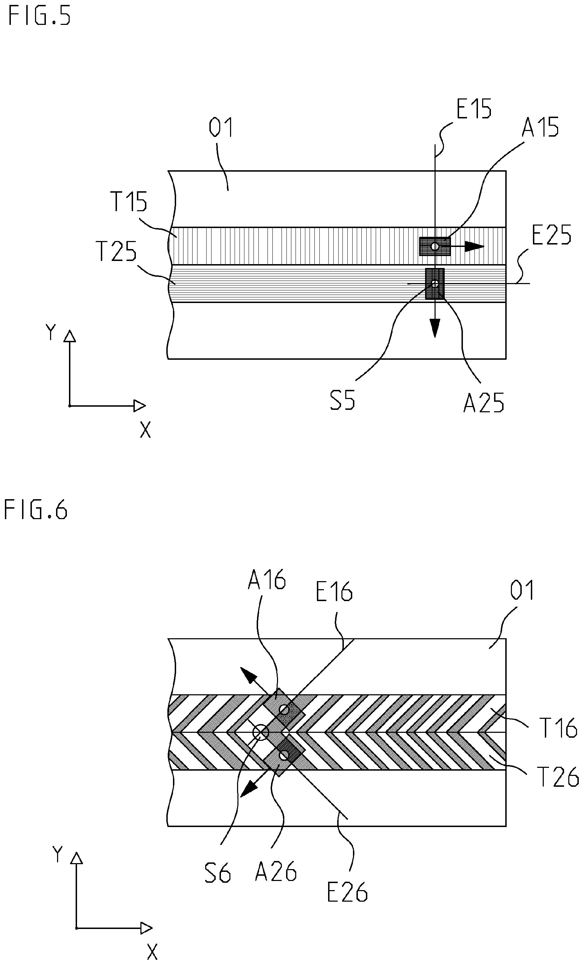

Die Figur 5 zeigt eine alternative Ausgestaltung. Dabei sind die Teilungsstriche der ersten Messteilung T15 gegenüber den Teilungsstrichen der zweiten Messteilung T25 zwar auch um einen Winkel abweichend von 0° geneigt, beispielsweise um 90° gegeneinander geneigt, die Teilungsstriche der Messteilung T15 sind aber um 90° gegenüber der Vorschubrichtung X geneigt und die Teilungsstriche der Messteilung T25 verlaufen parallel zur Vorschubrichtung X. Bei diesem Beispiel ergeben sich die zwei senkrecht zur Oberfläche O1 verlaufenden Ebenen E15 und E25, die sich in der Schnittachse S5 schneiden.

Die Teilungsstriche der Messteilungen T11, T12, T13, T15, T21, T22, T23, T25 können periodisch angeordnet sein, so dass diese eine Inkrementalteilung bilden, wie in den bisherigen Beispielen dargestellt.

In nicht gezeigter Weise kann die Inkrementalteilung mit einer Referenzmarke zur Bildung einer Absolutposition ergänzt sein, insbesondere kann eine Referenzmarke bzw. Refernzmarkierung in die Inkrementalteilung integriert sein.

Alternativ können auch Messteilungen T16, T26 eingesetzt werden, deren Teilungsstriche aperiodisch angeordnet sind und somit absolute Messteilungen T16, T26 bilden. Ein Beispiel ist in Figur 6 dargestellt. Der Messteilung T16 ist eine Abtasteinheit A16 zugeordnet und der Messteilung T26 eine Abtasteinheit A26. Die Abtasteinheiten A16, A26 können Zeilensensoren sein. Auch hier gilt, dass die Teilungsstriche der absoluten Messteilung T16 gegenüber den Teilungsstrichen der absoluten Messteilung T26 geneigt sind. Eine erste senkrechte Ebene E16 zur Oberfläche O1 in Richtung der Teilungsstriche der Messteilung T16 durch den Abtastort der Abtasteinheit A16 verlaufend schneidet eine zweite senkrechte Ebene E26 zur Oberfläche O1 in Richtung der Teilungsstriche der Messteilung T26 durch den Abtastort der Abtasteinheit A26 verlaufend und bildet somit eine Schnittachse S6.

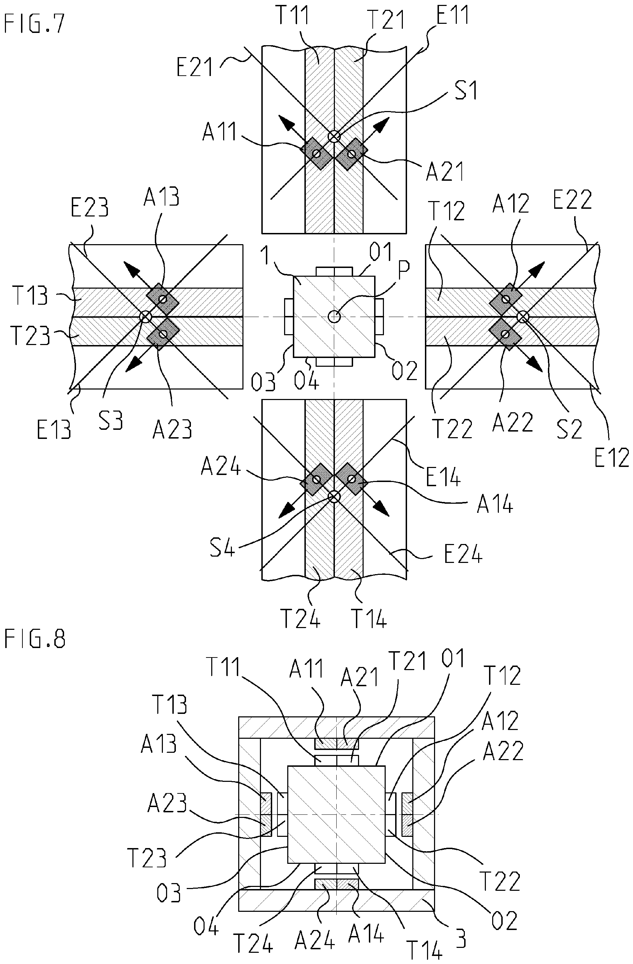

Anhand der Figuren 7 und 8 wird eine weitere mögliche Ausgestaltung einer Positionsmesseinrichtung gemäß der Erfindung erläutert. Der Grundaufbau entspricht dem bereits anhand der Figuren 1 bis 4 erläuterten Beispiel, weshalb hier nur die Ergänzungen näher erläutert werden und für übereinstimmende Teile die Bezeichnungen und Bezugszeichen aus den Figuren 1 bis 4 übernommen werden.

Die Erweiterung dieser Positionsmesseinrichtung gegenüber dem ersten Ausführungsbeispiel besteht darin, dass auch der Oberfläche O4 des Trägerkörpers 1 Abtasteinheiten A14, A24 zugeordnet sind. Bei dieser vorteilhaften Ausgestaltung ist somit jeder der in Vorschubrichtung X verlaufenden Oberflächen O1, O2, O3, O4 des Trägerkörpers 1 die gleiche Anzahl von Abtasteinheiten A11 bis A14, A21 bis A24 zugeordnet. Da die Abtasteinheiten A11 bis A14, A21 bis A24 elektrische Bauelemente aufweisen, stellen diese Wärmequellen dar. Indem jeder der Oberflächen O1, O2, O3, O4 jeweils die gleiche Anzahl von Abtasteinheiten A11 bis A14, A21 bis A24 zugeordnet ist, ist ein symmetrischer Wärmeeintrag auf den Trägerkörper 1 als auch auf den Halter 3 gewährleistet.

Die zusätzlichen Abtasteinheiten A14, A24 können dazu genutzt werden, um redundante Informationen zur Erfassung der sechs Freiheitsgrade zu generieren. Hierzu kann der Trägerkörper 1 auch auf der Oberfläche O4 eine oder mehrere Messteilungen tragen, beispielweise auch eine erste Messteilung T14 und eine zweite dazu geneigte Messteilung T24.

Besonders vorteilhaft sind auch hier die Teilungsstriche der Messteilungen T14, T24 derart zueinander geneigt und die zugehörigen Abtasteinheiten A14, A24 derart angeordnet, dass folgende Bedingung gilt:
Legt man eine erste Ebene E14 in Richtung der Teilungsstriche der ersten Messteilung T14 durch den Abtastort der Abtasteinheit A14 senkrecht zur Oberfläche O4, sowie eine zweite Ebene E24 in Richtung der Teilungsstriche der zweiten Messteilung T24 durch den Abtastort der Abtasteinheit A24 senkrecht zur Oberfläche O4, so ergibt sich zwischen diesen beiden Ebenen E14, E24 eine gemeinsame Schnittachse S4, wobei diese Schnittachse S4 ebenfalls durch den Punkt P verläuft.

Bei den bisher erläuterten Ausführungsbeispielen wurde die gegenseitige Neigung der Teilungsstriche der Messteilungen T11 bis T14, T21 bis T24 und die Anordnung der Abtasteinheiten A11 bis A14, A21 bis A24 derart gewählt, dass der gemeinsame thermisch neutrale Punkt P in der Querschnittsmitte des Trägerkörpers 1 liegt.

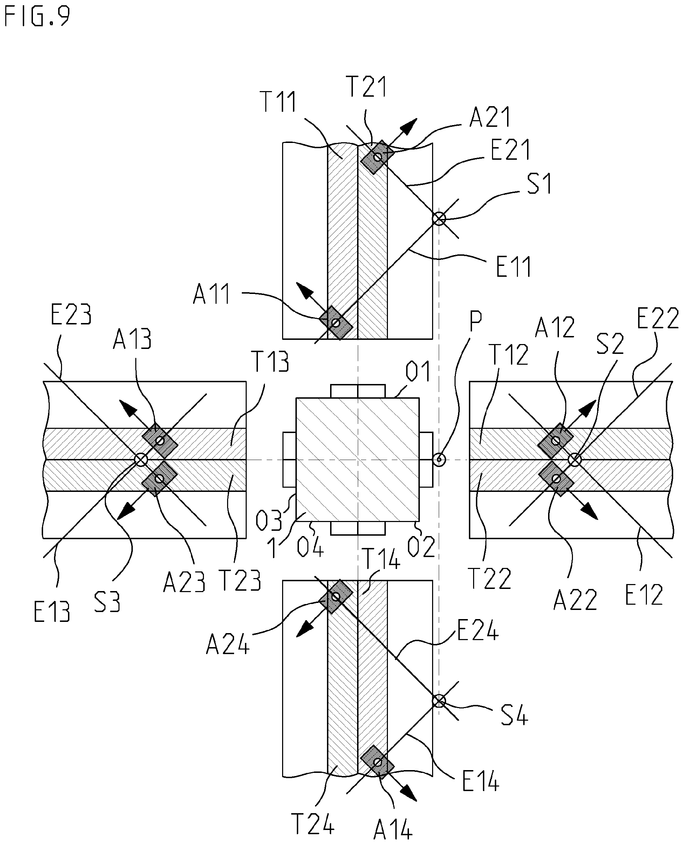

Mit dem Parameter Neigung der Teilungsstriche bzw. Wahl des Empfindlichkeitsvektors sowie dem Parameter Anordnung der Abtasteinheiten A11 bis A14, A21 bis A24 kann die Lage des gemeinsamen thermisch neutralen Punktes P nach Bedarf gewählt werden. Anhand der Figur 9 wird ein Beispiel dazu erläutert.

Der Trägerkörper 1 und die daran angeordneten Messteilungen T11 bis T14, T21 bis T24 entsprechen dem Ausführungsbeispiel der Figur 7, auf das Bezug genommen wird.

Zur Bildung eines gemeinsamen thermisch neutralen Punktes P außerhalb des Trägerkörpers 1 sind die Messteilungen T11 bis T14, T21 bis T24 und die den Messteilungen T11 bis T14, T21 bis T24 zugeordneten Abtasteinheiten A11 bis A14, A21 bis A24 nach folgender Maßgabe ausgebildet bzw. angeordnet:
Legt man eine erste Ebene E11 in Richtung der Teilungsstriche der ersten Messteilung T11 durch den Abtastort der Abtasteinheit A11 senkrecht zur Oberfläche O1, sowie eine zweite Ebene E21 in Richtung der Teilungsstriche der zweiten Messteilung T21 durch den Abtastort der Abtasteinheit A21 senkrecht zur Oberfläche O1, so ergibt sich zwischen diesen beiden Ebenen E11, E21 eine gemeinsame Schnittachse S1. Diese Schnittachse S1 bildet für die der Oberfläche O1 zugeordneten Abtasteinheiten A11, A12 eine thermisch neutrale Achse.

Legt man eine erste Ebene E12 in Richtung der Teilungsstriche der ersten Messteilung T12 durch den Abtastort der Abtasteinheit A12 senkrecht zur Oberfläche O2, sowie eine zweite Ebene E22 in Richtung der Teilungsstriche der zweiten Messteilung T22 durch den Abtastort der Abtasteinheit A22 senkrecht zur Oberfläche O2, so ergibt sich zwischen diesen beiden Ebenen E12, E22 eine gemeinsame Schnittachse S2. Diese Schnittachse S2 bildet für die der Oberfläche O2 zugeordneten Abtasteinheiten A12, A22 eine thermisch neutrale Achse.

Legt man eine erste Ebene E13 in Richtung der Teilungsstriche der ersten Messteilung T13 durch den Abtastort der Abtasteinheit A13 senkrecht zur Oberfläche O3, sowie eine zweite Ebene E23 in Richtung der Teilungsstriche der zweiten Messteilung T23 durch den Abtastort der Abtasteinheit A23 senkrecht zur Oberfläche O3, so ergibt sich zwischen diesen beiden Ebenen E13, E23 eine gemeinsame Schnittachse S3. Diese Schnittachse S3 bildet für die der Oberfläche O3 zugeordneten Abtasteinheiten A13, A23 eine thermisch neutrale Achse.

Erfindungsgemäß ist die Anordnung nun derart gewählt, dass sich die drei Schnittachsen S1, S2, S3 in einem gemeinsamen Punkt P schneiden.

Zum optimierten Wärmeeintrag ist bei diesem Beispiel die Positionsmesseinrichtung noch mit weiteren Abtasteinheiten A14, A24 ergänzt, die nach folgender Regel angeordnet sind:
Legt man eine erste Ebene E14 in Richtung der Teilungsstriche der ersten Messteilung T14 durch den Abtastort der Abtasteinheit A14 senkrecht zur Oberfläche O4, sowie eine zweite Ebene E24 in Richtung der Teilungsstriche der zweiten Messteilung T24 durch den Abtastort der Abtasteinheit A24 senkrecht zur Oberfläche O4, so ergibt sich zwischen diesen beiden Ebenen E14, E24 eine gemeinsame Schnittachse S4. Besonders vorteilhaft ist nun, wenn diese Schnittachse S4 ebenfalls durch den Punkt P verläuft.

Wie aus den obigen Beispielen ersichtlich ist, kann die räumliche Lage des Punktes P frei gewählt werden. Dieser Punkt P ist der thermisch neutrale Punkt, auch thermal center oder thermischer Fixpunkt genannt, auf den sich die zu messenden Freiheitsgrade beziehen. Der Punkt P kann beispielsweise an dem Ort gewählt werden, an dem der Halter 3 mit dem zu messenden Objekt verbunden wird oder er wird in den Tool-Center-Point einer Koordinatenmessmaschine oder einer Werkzeugmaschine gelegt.

Eine nach der Erfindung ausgestaltete Positionsmesseinrichtung kann zum Erfassen von Führungsfehlern einer Koordinatenmessmaschine oder einer Werkzeugmaschine eingesetzt werden. Dabei kann die Positionsmesseinrichtung einer Führung der Koordinatenmessmaschine oder der Werkzeugmaschine zugeordnet werden. Eine nach der Erfindung ausgestaltete Positionsmesseinrichtung kann aber auch selbst als Maschinenführung fungieren, so kann der Trägerkörper beispielsweise als Pinole einer Koordinatenmessmaschine ausgeführt sein. Dient der die Messteilungen tragende Trägerkörper als Führungselement ist es von Vorteil, wenn die Messteilungen in die Oberfläche des Trägerkörpers integriert sind, insbesondere hergestellt durch partielles Behandeln der Oberfläche mit Laserstrahlung. Dabei kann der Bereich der Messteilungen auch als Führungsfläche fungieren, insbesondere dann, wenn die Führung als Luftlagerung ausgebildet ist.

Insbesondere bei dem Einsatz einer nach der Erfindung ausgestalteten Positionsmesseinrichtung in einer Werkzeugmaschine kann es von Vorteil sein, den Trägerkörper 1 sowie die Abtastbaugruppe 2 in einem Gehäuse unterzubringen. Dabei kann - wie bei sogenannten gekapselten Positionsmesssystemen bekannt - das Gehäuse durch in Vorschubrichtung X verlaufende Dichtungen abgedeckt sein, durch die ein Mitnehmer für die Abtastbaugruppe 2 hindurchgreift.

## Patentansprüche

1. Positionsmesseinrichtung zur Messung der Relativlage zweier zueinander beweglicher Objekte in einer Vorschubrichtung (X) und in weiteren Freiheitsgraden (Y, Z, RX, RY, RZ), mit einem in der Vorschubrichtung (X) längserstreckten Trägerkörper (1) mit Messteilungen (T11-T26), und mit
einer relativ dazu beweglichen Abtastbaugruppe (2) mit mehreren Abtasteinheiten (A11-A26) zur Abtastung der Messteilungen (T11-T26), **dadurch gekennzeichnet, dass**
zumindest drei Oberflächen (01-04) des Trägerkörpers (1) jeweils eine erste Messteilung (T11-T16) und eine zweite Messteilung (T21-T26) tragen, wobei die erste Messteilung (T11-T16) und die zweite Messteilung (T21-T26) jeweils eine Folge von Teilungsstrichen aufweisen und die Teilungsstriche der ersten Messteilung (T11-T16) gegenüber den Teilungsstrichen der zweiten Messteilung (T21-T26) geneigt sind;
jeder der ersten Messteilungen (T11-T16) und jeder der zweiten Messteilungen (T21-T26) zumindest eine der Abtasteinheiten (A11-A26) zur Abtastung der jeweiligen Messteilung (T11-T26) an einem Abtastort zugeordnet ist, wobei diese zwei Abtasteinheiten (A11-A26) jeweils derart angeordnet sind und die Teilungsstriche der zwei Messteilungen (T11-T26) jeweils derart zueinander geneigt sind, dass jeweils zwei zu einer der Oberflächen (01-04) des Trägerkörpers (1) senkrechte Ebenen, die jeweils in Richtung der jeweiligen Teilungsstriche einer der Messteilungen (T11-T26) durch die Abtastorte der jeweils einer der Oberflächen (O1-O4) zugeordneten zwei Abtasteinheiten (A11-A26) verlaufen, eine gemeinsame Schnittachse (S1-S6) aufweisen und dass die sich so ergebenden drei Schnittachsen (S1-S6) durch einen gemeinsamen Punkt (P) verlaufen.

2. Positionsmesseinrichtung nach Anspruch 1, wobei die zumindest drei Oberflächen (01-04) des Trägerkörpers (1) und die Messteilungen (T21-T26) und die Abtasteinheiten (A11-A26) derart angeordnet und ausgebildet sind, dass die Lage der Abtastbaugruppe (2) relativ zum Trägerkörper (1) in sechs Freiheitsgraden (X, Y, Z, RX, RY, RZ) bestimmbar ist.

3. Positionsmesseinrichtung nach Anspruch 1, wobei der Trägerkörper (1) ein prismatischer Körper ist und die zumindest drei Oberflächen (01-04) Mantelflächen des prismatischen Körpers sind.

4. Positionsmesseinrichtung nach Anspruch 3, wobei der Trägerkörper (1) ein quaderförmiger Körper ist.

5. Positionsmesseinrichtung nach einem der vorhergehenden Ansprüche, wobei der gemeinsame Punkt (P) in der Querschnittsmitte des Trägerkörpers (1) liegt.

6. Positionsmesseinrichtung nach einem der vorhergehenden Ansprüche, wobei die erste Messteilung (T11-T16) und die zweite Messteilung (T21-T26) einer Oberfläche (O1-O4) jeweils benachbart zueinander entlang einer Richtung senkrecht zur Vorschubrichtung (X) angeordnet sind.

7. Positionsmesseinrichtung nach einem der vorhergehenden Ansprüche, wobei die Teilungsstriche der ersten Messteilung (T11-T14, T16) relativ zur Vorschubrichtung (X) abweichend von 0° geneigt sind und die Teilungsstriche der zweiten Messteilung (T21-T24, T26) relativ zur Vorschubrichtung (X) ebenfalls abweichend von 0° geneigt sind.

8. Positionsmesseinrichtung nach Anspruch 7, wobei die Teilungsstriche der ersten Messteilung (T11-T14, T16) und die Teilungsstriche der zweiten Messteilung (T21-T24, T26) betragsmäßig um den gleichen Winkel relativ zur Vorschubrichtung (X) geneigt sind.

9. Positionsmesseinrichtung nach Anspruch 8, wobei die Teilungsstriche der ersten Messteilung (T11-T14, T16) relativ zur Vorschubrichtung (X) um +45° geneigt sind und die Teilungsstriche der zweiten Messteilung (T21-T24, T26) relativ zur Vorschubrichtung (X) um -45° geneigt sind.

10. Positionsmesseinrichtung nach einem der vorhergehenden Ansprüche 1 bis 7, wobei die Teilungsstriche der ersten Messteilung (T15) relativ zur Vorschubrichtung (X) um 90° geneigt sind.

11. Positionsmesseinrichtung nach einem der vorhergehenden Ansprüche, wobei die Messteilungen (T11-T26) optisch abtastbar ausgebildet sind.

12. Positionsmesseinrichtung nach einem der vorhergehenden Ansprüche, wobei die Messteilungen (T11-T15, T22-T25) Inkrementalteilungen sind.

13. Positionsmesseinrichtung nach Anspruch 11, wobei die Messteilungen (T11-T15, T22-T25) Inkrementalteilungen sind in die jeweils eine Referenzmarkenstruktur integriert ist.

14. Positionsmesseinrichtung nach einem der vorhergehenden Ansprüche 1 bis 11, wobei die Messteilungen (T16, T26) absolute Teilungen sind.

15. Positionsmesseinrichtung nach einem der vorhergehenden Ansprüche, wobei jeder der in Vorschubrichtung (X) verlaufenden Oberflächen (O1-O4) des Trägerkörpers (1) die gleiche Anzahl von Abtasteinheiten (A11-A26) zugeordnet ist.

## Claims

1. Position measuring device for measuring the relative pose of two objects, which are movable with respect to one another, in an advance direction (X) and in further degrees of freedom (Y, Z, RX, RY, RZ), having a carrier body (1), which is elongate in the advance direction (X) and has measurement graduations (T11-T26), and having
a scanning assembly (2) that is movable with respect thereto, having a plurality of scanning units (A11-A26) for scanning the measurement graduations (T11-T26), **characterized in that**
at least three surfaces (01-04) of the carrier body (1) in each case carry a first measurement graduation (T11-T16) and a second measurement graduation (T21-T26), wherein the first measurement graduation (T11-T16) and the second measurement graduation (T21-T26) each have a succession of graduation lines and the graduation lines of the first measurement graduation (T11-T16) are inclined with respect to the graduation lines of the second measurement graduation (T21-T26);
at least one of the scanning units (A11-A26) for scanning the respective measurement graduation (T11-T26) at a scanning site is assigned to each of the first measurement graduations (T11-T16) and each of the second measurement graduations (T21-T26), wherein said two scanning units (A11-A26) are each arranged such, and the graduation lines of the two measurement graduations (T11-T26) are inclined in each case with respect to one another such, that in each case two planes which are perpendicular to one of the surfaces (01-04) of the carrier body (1) and which each extend in the direction of the respective graduation lines of one of the measurement graduations (T11-T26) through the scanning sites of the two scanning units (A11-A26) respectively assigned to one of the surfaces (01-04) have a common axis of intersection (S1-S6) and that the resultant three intersection axes (S1-S6) extend through a common point (P).

2. Position measuring device according to Claim 1, wherein the at least three surfaces (01-04) of the carrier body (1) and the measurement graduations (T21-T26) and the scanning units (A11-A26) are arranged and configured such that the pose of the scanning assembly (2) relative to the carrier body (1) is determinable in six degrees of freedom (X, Y, Z, RX, RY, RZ).

3. Position measuring device according to Claim 1, wherein the carrier body (1) is a prismatic body and the at least three surfaces (01-04) are lateral surfaces of the prismatic body.

4. Position measuring device according to Claim 3, wherein the carrier body (1) is a cuboid body.

5. Position measuring device according to one of the preceding claims, wherein the common point (P) lies in the cross-sectional centre of the carrier body (1).

6. Position measuring device according to one of the preceding claims, wherein the first measurement graduation (T11-T16) and the second measurement graduation (T21-T26) of a surface (01-04) are each arranged adjacent to one another in a direction perpendicular to the advance direction (X).

7. Position measuring device according to one of the preceding claims, wherein the graduation lines of the first measurement graduation (T11-T14, T16) are inclined in relation to the advance direction (X) at an angle that differs from 0° and the graduation lines of the second measurement graduation (T21-T24, T26) are inclined in relation to the advance direction (X) likewise at an angle that differs from 0°.

8. Position measuring device according to Claim 7, wherein the graduation lines of the first measurement graduation (T11-T14, T16) and the graduation lines of the second measurement graduation (T21-T24, T26) are inclined in relation to the advance direction (X) by the same angle in terms of absolute value.

9. Position measuring device according to Claim 8, wherein the graduation lines of the first measurement graduation (T11-T14, T16) are inclined in relation to the advance direction (X) by +45° and the graduation lines of the second measurement graduation (T21-T24, T26) are inclined in relation to the advance direction (X) by -45°.

10. Position measuring device according to one of the preceding Claims 1 to 7, wherein the graduation lines of the first measurement graduation (T15) are inclined in relation to the advance direction (X) by 90°.

11. Position measuring device according to one of the preceding claims, wherein the measurement graduations (T11-T26) are embodied to be optically scannable.

12. Position measuring device according to one of the preceding claims, wherein the measurement graduations (T11-T15, T22-T25) are incremental graduations.

13. Position measuring device according to Claim 11, wherein the measurement graduations (T11-T15, T22-T25) are incremental graduations, into which in each case a reference mark structure is integrated.

14. Position measuring device according to one of the preceding Claims 1 to 11, wherein the measurement graduations (T16, T26) are absolute graduations.

15. Position measuring device according to one of the preceding claims, wherein each of the surfaces (01-04) of the carrier body (1), which extend in the advance direction (X), is assigned the same number of scanning units (A11-A26).

## Revendications

1. Dispositif de mesure de position destiné à mesurer la position relative de deux objets mobiles l'un par rapport à l'autre dans une direction d'avancement (X) et dans d'autres degrés de liberté (Y, Z, RX, RY, RZ), ledit dispositif comprenant
un corps porteur (1) qui est allongé dans la direction d'avancement (X) et qui comporte des graduations de mesure (T11-T26), et
un ensemble de balayage (2) qui est mobile par rapport audit corps porteur et qui comporte une pluralité d'unités de balayage (A11-A26) destinées à balayer les graduations de mesure (T11-T26),
**caractérisé en ce que**
au moins trois surfaces (O1-O4) du corps porteur (1) portent chacune une première graduation de mesure (T11-T16) et une deuxième graduation de mesure (T21-T26), la première graduation de mesure (T11-T16) et la deuxième graduation de mesure (T21-T26) comportant chacune une séquence de traits de graduation et les traits de graduation de la première graduation de mesure (T11-T16) étant inclinés par rapport aux traits de graduation de la deuxième graduation de mesure (T21-T26) ;
chacune des premières graduations de mesure (T11-T16) et chacune des deuxièmes graduations de mesure (T21-T26) étant associées à au moins une des unités de balayage (A11-A26) destinée à balayer la graduation de mesure respective (T11-T26) à un emplacement de balayage, ces deux unités de balayage (A11-A26) étant disposées chacune, et les traits de graduation des deux graduations de mesure (T11-T26) étant inclinés les uns par rapport aux autres, de manière à ce que deux plans qui sont chacun perpendiculaires à l'une des surfaces (O1-O4) du corps porteur (1) et qui s'étendent chacun dans la direction des traits de graduation respectifs des graduations de mesure (T11-T26) en passant par les emplacements de balayage des deux unités de balayage (A11-A26) associées chacune à l'une des surfaces (O1-O4), comportent un axe de coupe commun (S1-S6) et à ce que les trois axes de coupe résultants (S1-S6) passent par un point commun (P).

2. Dispositif de mesure de position selon la revendication 1, les au moins trois surfaces (O1-O4) du corps porteur (1) et les graduations de mesure (T21-T26) et les unités de balayage (A11-A26) étant disposées et conçues de manière à ce que la position de l'ensemble de balayage (2) par rapport au corps porteur (1) puisse être déterminée suivant six degrés de liberté (X, Y, Z, RX, RY, RZ).

3. Dispositif de mesure de position selon la revendication 1, le corps porteur (1) étant un corps prismatique et les au moins trois surfaces (O1-O4) étant des surfaces latérales du corps prismatique.

4. Dispositif de mesure de position selon la revendication 3, le corps porteur (1) étant un corps parallélépipédique.

5. Dispositif de mesure de position selon l'une des revendications précédentes, le point commun (P) étant au centre de la section transversale du corps porteur (1).

6. Dispositif de mesure de position selon l'une des revendications précédentes, la première graduation de mesure (T11-T16) et la deuxième graduation de mesure (T21-T26) d'une surface (O1-O4) étant chacune disposées de manière adjacente l'une à l'autre suivant une direction perpendiculaire à la direction d'avancement (X) .

7. Dispositif de mesure de position selon l'une des revendications précédentes, les traits de graduation de la première graduation de mesure (T11-T14, T16) étant inclinés par rapport à la direction d'avancement (X) d'un angle différent de 0° et les traits de graduation des deuxièmes graduations de mesure (T21-T24, T26) étant inclinés par rapport à la direction d'avancement (X) également d'un angle différent de 0°.

8. Dispositif de mesure de position selon la revendication 7, les traits de graduation de la première graduation de mesure (T11-T14, T16) et les traits de graduation de la deuxième graduation de mesure (T21-T24, T26) étant inclinés en valeur absolue du même angle par rapport à la direction d'avancement (X).

9. Dispositif de mesure de position selon la revendication 8, les traits de graduation de la première graduation de mesure (T11-T14, T16) étant inclinés de +45° par rapport à la direction d'avancement (X) et les traits de graduation de la deuxième graduation de mesure (T21-T24, T26) étant inclinés de -45° par rapport à la direction d'avancement (X).

10. Dispositif de mesure de position selon l'une des revendications précédentes 1 à 7, les traits de graduation de la première graduation de mesure (T15) étant inclinés de 90° par rapport à la direction d'avancement (X).

11. Dispositif de mesure de position selon l'une des revendications précédentes, les graduations de mesure (T11-T26) étant conçues de manière à pouvoir être balayées optiquement.

12. Dispositif de mesure de position selon l'une des revendications précédentes, les graduations de mesure (T11-T15, T22-T25) étant des graduations incrémentales.

13. Dispositif de mesure de position selon la revendication 11, les graduations de mesure (T11-T15, T22-T25) étant des graduations incrémentales dans chacune desquelles une structure de repère de référence est intégrée.

14. Dispositif de mesure de position selon l'une des revendications précédentes 1 à 11, les graduations de mesure (T16, T26) étant des graduations absolues.

15. Dispositif de mesure de position selon l'une des revendications précédentes, chacune des surfaces (O1-O4) du corps porteur (1) qui s'étendent dans la direction d'avancement (X) étant associées au même nombre d'unités de balayage (A11-A26).
